(19) Europäisches Patentamt
European Patent Office
Office européen des brevets

(11) **EP 2 683 153 B1**

(12) **EUROPEAN PATENT SPECIFICATION**

(45) Date of publication and mention
of the grant of the patent:
**16.10.2019 Bulletin 2019/42**

(51) Int Cl.:
***H04N 13/00*** *(2018.01)*

(21) Application number: **12754985.5**

(86) International application number:
**PCT/JP2012/055253**

(22) Date of filing: **01.03.2012**

(87) International publication number:
**WO 2012/121108 (13.09.2012 Gazette 2012/37)**

(54) **VEHICLE-MOUNTED CAMERA DEVICE**

FAHRZEUGMONTIERTE KAMERAVORRICHTUNG

DISPOSITIF DE CAMÉRA MONTÉ SUR UN VÉHICULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.03.2011 JP 2011047079**

(43) Date of publication of application:
**08.01.2014 Bulletin 2014/02**

(73) Proprietor: **Hitachi Automotive Systems, Ltd. Hitachinaka-shi Ibaraki 312-8503 (JP)**

(72) Inventors:
• **HAYAKAWA Jun**
**Hitachinaka-shi, Ibaraki 312-8503 (JP)**
• **FUKUHARA Masaaki**
**Hitachinaka-shi, Ibaraki 312-0062 (JP)**
• **KATAISHI Tomoyuki**
**Hitachinaka-shi, Ibaraki 312-0062 (JP)**

(74) Representative: **MERH-IP Matias Erny Reichl Hoffmann**
**Patentanwälte PartG mbB**
**Paul-Heyse-Strasse 29**
**80336 München (DE)**

(56) References cited:
EP-A2- 1 684 531      JP-A- H 077 653
JP-A- 11 328 413      JP-A- 2000 341 719
JP-A- 2007 104 349    US-A1- 2007 076 112
US-A1- 2010 328 427

**Description**

Technical Field

The present invention relates to a vehicle-mounted camera device mounted on a vehicle.

Background Art

In recent years, techniques using a vehicle-mounted camera device as an external recognition sensor have been advanced as a vehicle-mounted safety device. Particularly, a stereo camera technique having two imaging units has been developed.

A stereo camera has imaging units on both the right and left sides, and an image control unit thereof controls imaging timings and image data transmission timings of the right and left imaging units.

Image data signals transmitted from the right and left imaging units are transmitted to an image processing unit at the center of the camera to be subjected to an image processing. Thereafter, a recognition application or the like uses the images processed in the image processing unit to recognize an object, thereby performing vehicle control depending on the recognition result.

The signals transmitted from the right and left imaging units may be clock signals or image synchronization signals in addition to the image data signals. The image synchronization signal indicates a vertical synchronization signal or a horizontal synchronization signal for determining an aspect size of the screen.

The stereo camera needs to calculate a disparity based on the images shot in the right and left imaging units for calculating a distance. The right and left imaging units need to shoot images at the same time for calculating the disparity.

In a typical stereo camera, the image control unit sends an imaging instruction to the right and left imaging units at the same time such that the right and left imaging units shoot images at the same time. The image data shot at the same time is transmitted to the image processing unit at the same timing.

Thus, when the image data signals, the clock signals or the image synchronization signals are transmitted from the right and left imaging units to the image processing unit, there is a problem that switching easily occurs in many signal lines at the same time and unnecessary large radiation noises are generated.

The vehicle-mounted camera device such as a stereo camera is attached near the room mirror in the vehicle interior in many cases. The circumstances around the room mirror are disadvantageous for an attachment position of a TV antenna (attached to or embedded in the front glass), a GPS antenna (on or near the dashboard) or EMC (Electromagnetic Compatibility). That is, even unnecessary small radiation noises can be easily caught by the TV antenna or GPS antenna. Under the condition of the attachment around the room mirror, a vehicle-mounted camera has a laterally elongate structure such as antenna-like structure, so as not to break a view of the driver or the passenger, which is disadvantageous for EMC.

Against the problem, as described in PTL 1, there is disclosed a structure capable of reducing unnecessary radiation noises by offsetting a data signal from a clock signal.

In US 2007/0076112 A1 an image pickup apparatus having a plurality of image pickup means is described. The image pickup apparatus thereby comprises a control unit which controls a driving unit so that a plurality of image pickup units conducts exposure at substantially same timing. The image pickup apparatus also comprises a camera signal processing unit which executes camera signal processing of output data of a plurality of image pickup units.

In US 2010/0328427 A1 a stereo image processing method and a stereo image processing apparatus is described. The stereo image processing apparatus thereby comprises a matching area control unit configured to set a matching area for each pixel based on the disparity data read from the calculated disparity storage unit and the disparity calculating unit configured to perform a matching on the image data based on the plurality of image data read from the image memory and the matching area for each pixel set by the matching area control unit to calculate disparity data.

Citation List

Patent Literature

PTL1: Japanese Patent Application Laid-Open No. 2001-345790
PTL2: US 2007/076112 A1
PTL3: US 2010/328427 A1

Summary of Invention

Technical Problem

However, with the structure in PTL 1, the stereo camera is less effective in reducing unnecessary radiation noises only by simply offsetting data from a clock, and consequently it employs a method for reducing a noise level by many noise canceling units (such as lug terminal, radio wave absorber and shield tape), which causes higher cost.

It is an object of the present invention to reduce unnecessary large radiation noises generated when image data signals, clock signals or image synchronization signals are transmitted from two imaging units to an image processing unit in a low-cost vehicle-mounted camera device.

Solution to Problem

To solve the problems, the features of the independent claim are suggested. Preferred developments are in the dependent claims.

Advantageous Effects of Invention

It is possible to reduce unnecessary large radiation noises generated when image data signals, clock signals or image synchronization signals are transmitted from two imaging units to an image processing unit in a low-cost vehicle-mounted camera device.

Brief Description of Drawings

FIG. 1 is a diagram illustrating a structure of a vehicle-mounted camera device according to the present invention.
FIG. 2 is a diagram illustrating transmission of image data in the vehicle-mounted camera device according to the present invention.
FIG. 3 is a waveform diagram in which serial signals transmitted from a first imaging unit and a second imaging unit to an image processing unit in the vehicle-mounted camera device according to the present invention are offset.
FIG. 4 is a waveform diagram in which the phases of the serial signals transmitted from the first imaging unit and the second imaging unit to the image processing unit in the vehicle-mounted camera device according to the present invention are offset by 180 degrees.
FIG. 5 is a waveform diagram in which parallel signals transmitted from the first imaging unit and the second imaging unit to the image processing unit in the vehicle-mounted camera device according to the present invention are offset.
FIG. 6 is a waveform diagram in which the phases of the parallel signals transmitted from the first imaging unit and the second imaging unit to the image processing unit in the vehicle-mounted camera device according to the present invention are offset by 180 degrees.
FIG. 7 is a diagram in which circuit devices are inserted in the signal lines from the first imaging unit and the second imaging unit to the image processing unit in the vehicle-mounted camera device according to the present invention.
FIG. 8 is a waveform diagram of the signals delayed by inserting the circuit devices in the serial signal lines from the first imaging unit and the second imaging unit to the image processing unit in the vehicle-mounted camera device according to the present invention.
FIG. 9 is a waveform diagram of the signals delayed by inserting the circuit devices in the parallel signal lines from the first imaging unit and the second imaging unit to the image processing unit in the vehicle-mounted camera device according to the present invention.

Description of Embodiments

An embodiment will be described below with reference to the drawings.

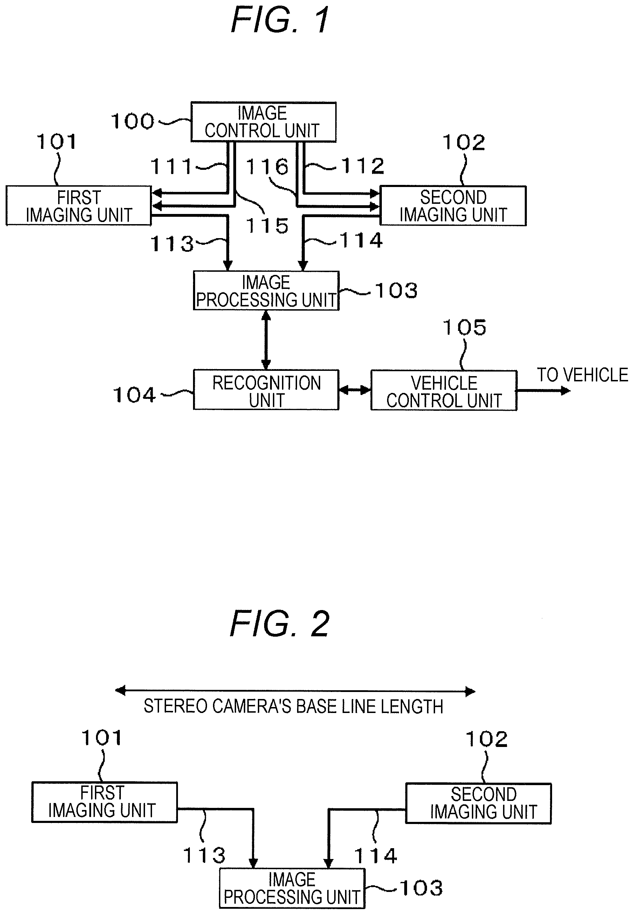

FIG. 1 is a diagram schematically illustrating a vehicle-mounted camera device having two imaging units. The embodiment of the vehicle-mounted camera device as a stereo camera will be described below, but is also applicable to a vehicle-mounted camera device having two monocular cameras.
The stereo camera as a vehicle-mounted camera device has two imaging units (cameras) including a first imaging unit 101 and a second imaging unit 102 at the right and left sides thereof . An image control unit 100 outputs imaging timing signals via a control line 111 (first control line) and a control line 112 (second control line) to control imaging timings of the first imaging unit 101 and the second imaging unit 102. Typically, the imaging timing signals for controlling the imaging timings of the control line 111 and the control line 112 are shutter control signals, or register setting signals for imaging devices or AFE (Analog Front End: A/D converter).
Image data (left image and right image) shot by the first imaging unit 101 and the second imaging unit 102 is transmitted to an image processing unit 103 via a signal line 113 (first signal line) and a signal line 114 (second signal line) together with image data signals, clock signals or image synchronization signals. The transmission timings of the signal line 113 and the signal line 114 are controlled by the transmission timing control signals output from the image control unit 100 via a transmission timing control signal line 115 (first transmission timing control signal line) and a transmission timing control signal line 116 (second transmission timing control signal line) . Herein, the transmission timing control signal line 115 and the transmission timing control signal line 116 are clock lines for reference clock, and the like.
The image processing unit 103 calculates a disparity by use of the right and left image data shot by the first imaging unit 101 and the second imaging unit 102. A recognition unit 104 performs a recognition processing to perform an object recognition processing or to calculate a distance based on the result of the image processing. A vehicle control unit 105 makes calculations for vehicle control and issues a vehicle control instruction based on the processing result of the recognition unit 104.
For the stereo camera, the image data shot by the first imaging unit 101 and the second imaging unit 102 has to be shot at the same time for calculating a disparity. Thus, the image control unit 100 controls, based on the signals output via the control line 111 and the control line 112, such that the first imaging unit 101

and the second imaging unit 102 shoot images at the same time.

The image data shot by the first imaging unit 101 and the second imaging unit 102 is transmitted to the image processing unit 103 through the signal line 113 and the signal line 114 together with the image data signals, the clock signals or the image synchronization signals by the transmission timing signals controlled by the transmission timing control signal line 115 and the transmission timing control signal line 116 in the image control unit 100.

The present invention is characterized in that the timings of transmitting the image data signals, the clock signals or the image synchronization signals shot by the first imaging unit 101 and the second imaging unit 102 via the signal line 113 and the signal line 114 are temporally offset.

The image control unit 100 can control the timings of transferring the image data shot by the first imaging unit 101 and the second imaging unit 102 to the image processing unit 103 by use of the transmission timing control signal line 115 and the transmission timing control signal line 116. That is, the image control unit 100 can offset the temporal timings of the signal line 113 and the signal line 114 through which the image data signals, the clock signals or the image synchronization signals shot by the first imaging unit 101 and the second imaging unit 102 are transmitted.

FIG. 1 schematically illustrates the vehicle-mounted camera device, but the recognition unit 104 and the vehicle control unit 105 may be separated from the vehicle-mounted camera device to be mounted on the vehicle. Alternatively, only the vehicle control unit 105 may be mounted on the vehicle .

FIG. 2 is a diagram illustrating transmission of the image data by the vehicle-mounted camera device having two imaging unit or a stereo camera.

The image data shot by the first imaging unit 101 and the second imaging unit 102 is transmitted to the image processing unit 103 via the signal line 113 and the signal line 114 together with the image data signals, the clock signals or the image synchronization signals, but the transmission paths are arranged as long as the base line length (length between the first imaging unit 101 and the second imaging unit 102) illustrated in FIG. 2. The base line length of the stereo camera is designed to have a length of about 20 cm to 100 cm in many cases, and correspondingly the transmission paths of the signal line 113 and the signal line 114 are longer.

Further, as can be seen from the transmission paths of the signal line 113 and the signal line 114 in FIG. 2, the transmission paths form a pseudo dipole antenna, and noises in the signal line 113 and the signal line 114 occur as unnecessary radiation noises via the pseudo dipole antenna.

Therefore, the temporal timings of the signal line 113 and the signal line 114 through which the image data signals, the clock signals or the image synchronization signals shot by the first imaging unit 101 and the second imaging unit 102 are transmitted are offset, and thus the current change amount di/dt per unit time can be restricted for the entire substrate, thereby preventing unnecessary radiation.

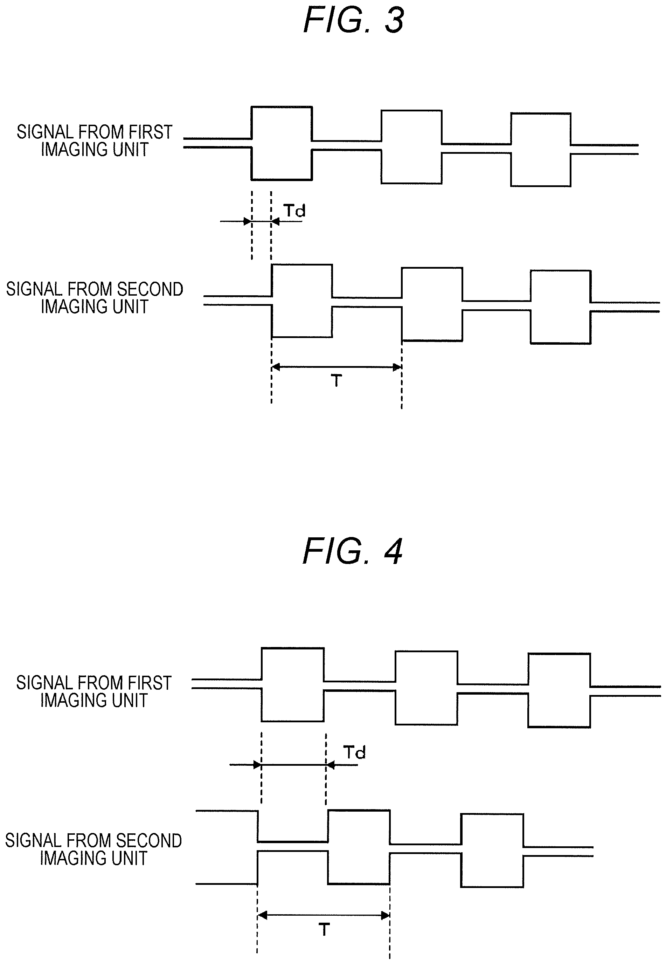

The image control unit 100 illustrated in FIG. 1 can control the timings of transferring the image data shot by the first imaging unit 101 and the second imaging unit 102 to the image processing unit 103 through the transmission timing control signal line 115 and the transmission timing control signal line 116 by the control line 111 and the control line 112, and can offset the timings of the signal line 113 and the signal line 114 through which the image data signals, the clock signals, or the image synchronization signals shot by the first imaging unit 101 and the second imaging unit 102 are transmitted. FIG. 3 illustrates the waveforms in which the timings of the signal line 113 and the signal line 114 are offset by Td.

FIG. 3 is a waveform diagram in which the signals (image data signals, clock signals, or image synchronization signals) transmitted from the first imaging unit 101 and the second imaging unit 102 to the image processing unit 103 via the signal line 113 and the signal line 114 are offset, and illustrates a case in which the signal line 113 and the signal line 114 use two-wire serial differential communication such as LVDS (Low Voltage Differential Signaling) . The image data signals, the clock signals or the image synchronization signals are put together into serial signals to be transmitted via the signal line 113 and the signal line 114.

As illustrated in FIG. 3, two signal waveforms (waveforms with one cycle of T) of the signal transmitted from the first imaging unit 101 via the signal line 113 to the image processing unit 103 and the signal transmitted from the second imaging unit 102 via the signal line 114 to the image processing unit 103 are offset by an interval of predetermined time Td, thereby reducing noises due to temporally simultaneous switching. Thus, unnecessary radiation noises can be reduced.

FIG. 4 is a waveform diagram in which the phases of the signal line 113 and the signal line 114 from the first imaging unit 101 and the second imaging unit 102 to the image processing unit 103 are offset by 180 degrees.

As illustrated in FIG. 4, the phases of the signal line 113 and the signal line 114 from the first imaging unit 101 and the second imaging unit 102 to the image processing unit 103 are offset by a predetermined time Td=180 degrees, thereby obtaining an advantage of compensating for a switching current on the driver for driving a signal.

As illustrated in FIG. 3 or FIG. 4, the signal offset time Td according to the invention is at $|Td| < T$ assuming the signal waveform cycle of T. This is because if the synchronization between the right and left images is remarkably offset for calculating a disparity of the stereo camera, a delay occurs in the subsequent processings.

Typically, in consideration of a setup/hold time of the reception-side IC or a delay time such as waveform rise/fall dullness, the cycle T is desirably set in the range of about |Td| <T-delay time (several nsec to several tens nsec). With the setting, data can be accurately obtained even when the signals are offset.

An internal logic is incorporated such that the image processing unit 103 in FIG. 1 can detect a synchronization offset when the synchronization of the right and left images is remarkably offset due to any EMI noise, so that the image processing unit 103 can notify a non-synchronized image to the recognition unit 104, the vehicle control unit 105 can stop controlling the vehicle, the image processing unit 103 can notify a non-synchronized image to the image control unit 100, and a feedback system capable of finely adjusting the timings of the transmission timing control signals transmitted via the transmission timing control signal line 115 and the transmission timing control signal line 116 can be constructed.

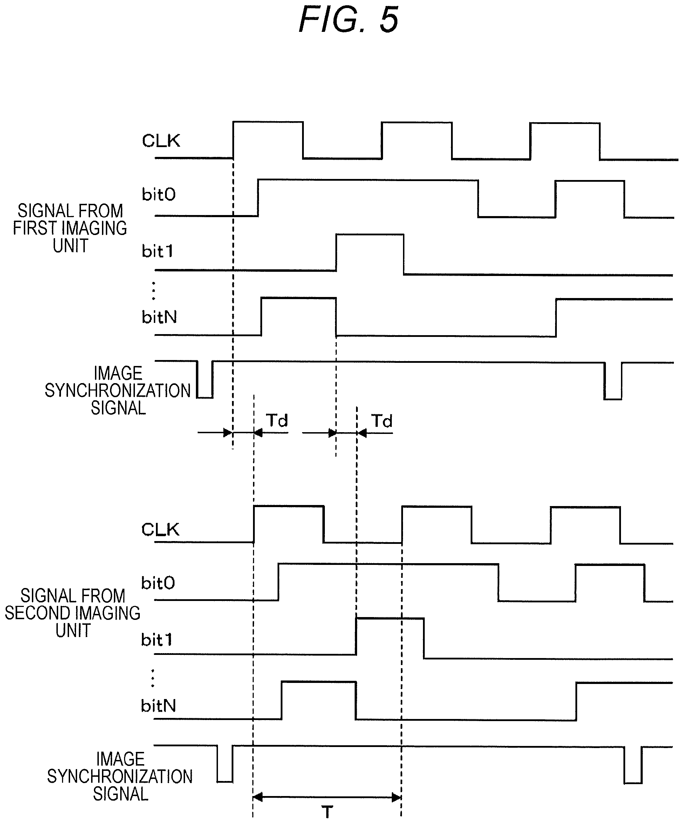

FIG. 5 is a waveform diagram in which the signals transmitted from the first imaging unit 101 and the second imaging unit 102 to the image processing unit 103 via the signal line 113 and the signal line 114 are offset, and illustrates a case in which the signal line 113 and the signal line 114 use parallel communication in which the clock signals (CLK), the image data signals (bit0, bit1, ..., bitN) or the image synchronization signals are parallel.

Particularly in the parallel communication, a plurality of signal lines through which the image data signals are transmitted are present in many cases (the number of bits also increases when the bus width is large), and the current change di/dt on the simultaneous switching easily increases. Thus, unnecessary radiation noises are easily problematic.

As illustrated in FIG. 5, the parallel communication is realized in a plurality of communication lines through which the clock signals (CLK), the image data signals (each bit), or the image synchronization signals are transmitted, respectively. Typically, the image data signals (bit0 to bitN) and the image synchronization signals are output based on the clock signals (CLK) from the first imaging unit 101 and the second imaging unit 102. The cock signals (CLK), the image data signals (bit0 to bitN) and the image synchronization signals are offset by a predetermined time by the IC or driver circuit to transmit, respectively, and data in the signal lines through which the image data signals are transmitted is latched at the clock rise edge or fall edge on the reception side such as the image processing unit 103. The image synchronization signal is a signal indicating vertical and horizontal separations of the screen, and issues a pulse at a certain timing.

As illustrated in FIG. 5, the signal waveforms of the signal (the clock signal or the image data signal) transmitted from the first imaging unit 101 to the image processing unit 103 via the signal line 113 and the signal (the clock signal, the image data signal or the image synchronization signal) transmitted from the second imaging unit 102 to the image processing unit 103 via the signal line 114 are offset, thereby reducing noises due to the temporally simultaneous switching. Therefore, unnecessary radiation noises can be reduced.

FIG. 5 illustrates a state in which the clock signals, the image data signals and the image synchronization signals are offset by a predetermined time Td between the signal line 113 and the signal line 114.

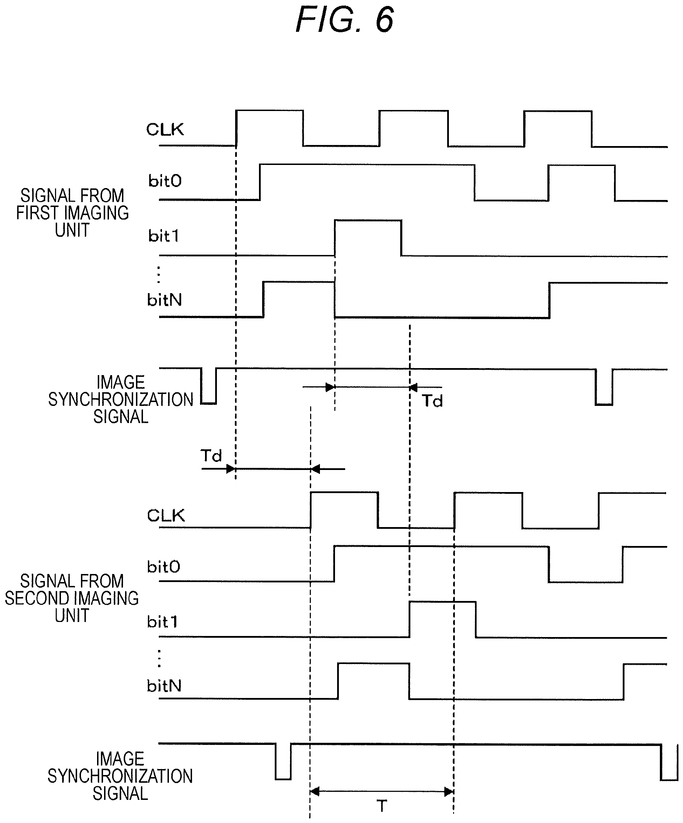

FIG. 6 is a waveform diagram in which the phases of the signal line 113 and the signal line 114 from the first imaging unit 101 and the second imaging unit 102 to the image processing unit 103 are offset by 180 degrees.

As illustrated in FIG. 6, the phases of the signal line 113 and the signal line 114 from the first imaging unit 101 and the second imaging unit 102 to the image processing unit 103 are offset by Td=180 degrees, thereby obtaining an advantage of compensating for a switching current at the driver for driving a signal.

As illustrated in FIG. 5 or FIG. 6, the signal offset time Td according to the invention is at |Td| <T assuming the signal waveform cycle of T. This is because if the synchronization between the right and left images is remarkably offset for calculating a disparity of the stereo camera, a delay occurs in the subsequent processings.

Similarly as in the serial communication, typically, in consideration of a setup/hold time on the reception-side IC or a delay time such as waveform rise/fall dullness, the cycle T is desirably set in the range of about |Td| <T-delay time (several nsec to several tens nsec). With the setting, data can be accurately obtained even when the signals are offset.

An internal logic is incorporated such that the image processing unit 103 in FIG. 1 can detect a synchronization offset when the synchronization of the right and left images is remarkably offset due to any EMI noise, so that the image processing unit 103 can notify a non-synchronized image to the recognition unit 104, the vehicle control unit 105 can stop controlling the vehicle, the image processing unit 103 can notify a non-synchronized image to the image control unit 100, and a feedback system capable of finely adjusting the transmission timing control signal lines 115 and 116 can be constructed.

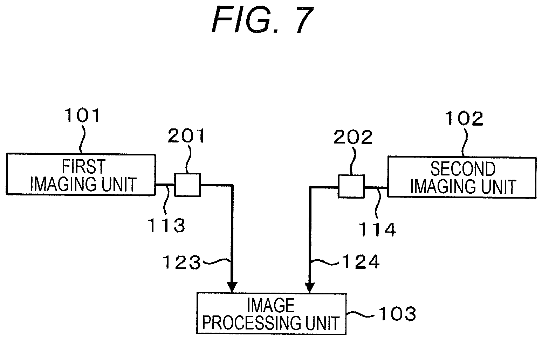

FIG. 7 is a diagram in which a circuit device 201 and a circuit device 202 are inserted in the signal line 113 (the first signal line) and the signal line 114 (the second signal line) from the first imaging unit 101 and the second imaging unit 102 to the image processing unit 103.

Typically, the circuit device 201 and the circuit device 202 are inserted for maintaining the signal quality (restricting signal reflections) in the signal line 113 and the signal line 114 from the first imaging unit 101 and the second imaging unit 102 to the image processing unit 103, respectively, in many cases. Typically, for the circuit device 201 and the circuit device 202, dumping resistors, ferrite beads, coils, capacitors or buffer circuits are inserted in many cases.

Also in the system in which the signal timings of the signal line 113 and the signal line 114 from the first imaging unit 101 and the second imaging unit 102 to the image processing unit 103 cannot be offset, a constant of the circuit device 201 and a constant of the circuit device 202 are intentionally changed so that the properties of the waveforms of a signal line 123 (third signal line) and a signal line 124 (fourth signal line) can be changed after passing the circuit device 201 and the circuit device 202, thereby offsetting the signal timings.

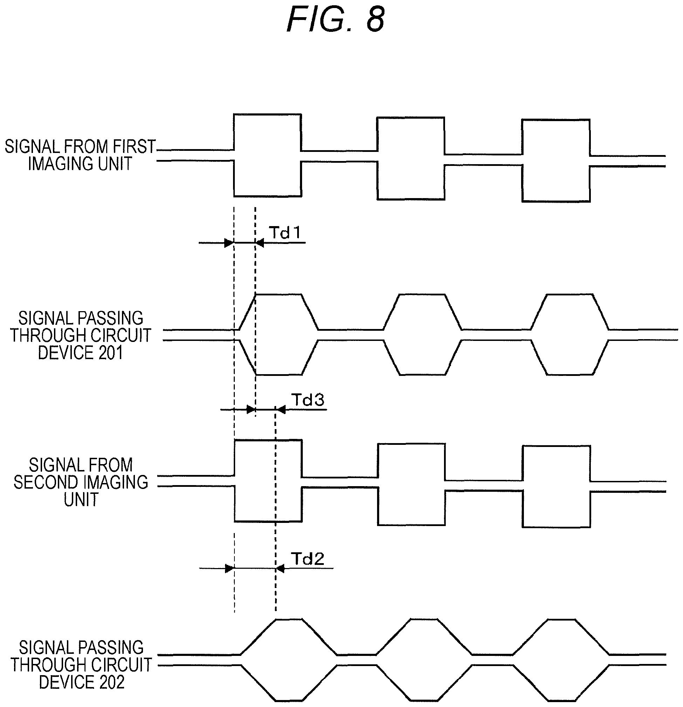

FIG. 8 illustrates a case in which the circuit device 201 and the circuit device 202, which have the mutually different constants, are inserted in the signal line 113 and the signal line 114 from the first imaging unit 101 and the second imaging unit 102 to the image processing unit 103, respectively, and illustrates a case in which the signal line 113 and the signal line 114 use two-wire serial differential communication such as LVDS.

A signal transmitted via the signal line 123 after the signal transmitted from the first imaging unit 101 to the image processing unit 103 passes the circuit device 201 inserted in the signal line 113 is offset by a predetermined time Td1. Similarly, a signal transmitted via the signal line 124 after the signal transmitted from the second imaging unit 102 to the image processing unit 103 passes the circuit device 202 inserted in the signal line 114 is offset by a predetermined time Td2.

Consequently, the signals transmitted via the signal line 123 and the signal line 124 are offset by a predetermined time Td3, thereby reducing noises due to the temporally simultaneous switching. Therefore, unnecessary radiation noises can be reduced.

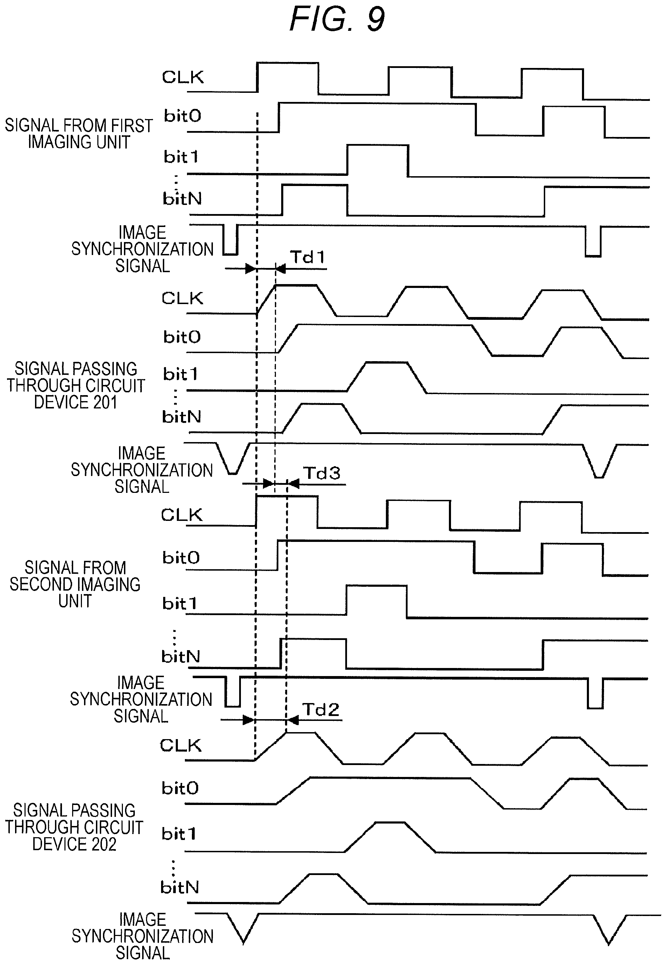

FIG. 9 is a waveform diagram in which the signals transmitted via the signal line 113 and the signal line 114 from the first imaging unit 101 and the second imaging unit 102 to the image processing unit 103 are offset, and illustrates a case in which the signal line 113 and the signal line 114 use parallel communication in which the clock signals CLK, the image data signals or the image synchronization signals are parallel, respectively.

Particularly in the parallel communication, a plurality of signal lines through which the image data signals are transmitted are present in many cases (the number of bits also increases when the bus width is large), and the current change di/dt on the simultaneous switching easily increases. Therefore, unnecessary radiation noises are easily problematic.

A signal (clock signal, image data signal, or image synchronization signal) transmitted via the signal line 123 after the signal transmitted from the first imaging unit 101 to the image processing unit 103 passes the circuit device 201 inserted in the signal line 113 is offset by a predetermined time Td1 from the signal line 113 (clock signal, image data signal or image synchronization signal).

Similarly, a signal (clock signal, image data signal or image synchronization signal) transmitted via the signal line 124 after the signal transmitted from the second imaging unit 102 to the image processing unit 103 passes the circuit device 202 inserted in the signal line 114 is offset by a predetermined time Td2 from the signal (clock signal, image data signal, or image synchronization signal) transmitted via the signal line 114.

Consequently, the signals transmitted via the signal line 123 and the signal line 124 are offset by a predetermined time Td3, thereby reducing noises due to the temporally simultaneous switching. Therefore, unnecessary radiation noises can be reduced.

As described above, according to the present invention, it is possible to reduce unnecessary large radiation noises occurring when the image data signals, the clock signals or the image synchronization signals from the two imaging units are transmitted to the image processing unit 103 at low cost in the vehicle-mounted camera device having the two imaging units.

Reference Signs List

| | |
|---|---|
| 100 | Image control unit |
| 101 | First imaging unit |
| 102 | Second imaging unit |
| 103 | Image processing unit |
| 104 | Recognition unit |
| 105 | Vehicle control unit |
| 111,112 | Control line |
| 113,114 | Signal line |
| 201,202 | Circuit device |

**Claims**

1. A vehicle-mounted camera device comprising:

a first imaging unit (101) for shooting an image and outputting an image data signal;
a second imaging unit (102) for shooting an image and outputting an image data signal;
an image control unit (100) for outputting imaging timing signals for controlling imaging timings of the first imaging unit (101) and the second imaging unit (102) to the first imaging unit (101) and the second imaging unit (102), and outputting transmission timing control signals for controlling transmission timings of a first signal and a second signal output from the first imaging unit (101) and the second imaging unit (102) to the first imaging unit (101) and the second imaging unit (102); and
an image processing unit (103) for performing an image processing on the first signal and the second signal output from the first imaging unit (101) and the second imaging unit (102), **characterized in that**
the first imaging unit (101) is directly connected to the image processing unit (103) via a first signal line (113);

the second imaging unit (102) is directly connected to the image processing unit (103) via a second signal line (114) ; wherein the transmission paths of the first signal line (113) and the second signal line (114) form a pseudo dipole antenna; and

the image control unit (100) temporally offsets a timing of outputting the first signal from the first imaging unit (101) to the image processing unit (103) via the first signal line (113) from a timing of outputting the second signal from the second imaging unit (102) to the image processing unit (103) via the second signal line (114) by a predetermined time Td based on the transmission timing control signals and wherein the predetermined time Td satisfies the relation

$$|Td| < T$$

wherein T is a signal waveform cycle of the first and second signal.

2. The vehicle-mounted camera device according to Claim 1, wherein
the signals output from the first imaging unit (101) and the second imaging unit (102) are at least clock signals, image data signals or image synchronization signals.

3. The vehicle-mounted camera device according to Claim 1, wherein
the first imaging unit (101) and the second imaging unit (102) shoot images per frame at the same time.

4.  The vehicle-mounted camera device according to Claim 1, comprising:

a first control line (111) for transmitting the imaging timing signal between the first imaging unit (101) and the image control unit (100); and
a second control line (112) for transmitting the imaging timing signal between the second imaging unit (102) and the image control unit (100).

5. The vehicle-mounted camera device according to Claim 1, comprising:

a first transmission timing control signal line (115) for transmitting the transmission timing control signal between the first imaging unit (101) and the image control unit (100); and
a second transmission timing control signal line (116) for transmitting the transmission timing control signal between the second imaging unit (102) and the image control unit (100).

6. The vehicle-mounted camera device according to Claim 1, wherein
the image processing unit (103) calculates disparity information based on the image data signals shot by the first imaging unit (101) and the second imaging unit (102).

7. The vehicle-mounted camera device according to Claim 1, comprising: a recognition unit (104) for performing a recognition processing based on the images subjected to the image processing in the image processing unit (103).

8. The vehicle-mounted camera device according to Claim 7, comprising: a vehicle control unit (105) for calculating and outputting a vehicle control signal for controlling the vehicle based on a recognition result subjected to the recognition processing in the recognition unit (104).

9. The vehicle-mounted camera device according to any one of claims 1 to 8, wherein the phases of the first signal line (113) and the second signal line (114) are offset by the predetermined timing Td = 180 degrees.

**Patentansprüche**

1. An einem Fahrzeug montierte Kameraeinrichtung, die Folgendes umfasst:

eine erste Bilderzeugungseinheit (101) zum Aufnehmen eines Bildes und Ausgeben eines Bilddatensignals;
eine zweite Bilderzeugungseinheit (102) zum Aufnehmen eines Bildes und Ausgeben eines Bilddatensignals;
eine Bildsteuereinheit (100) zum Ausgeben von Bilderzeugungszeitsignalen zum Steuern von Bilderzeugungszeitpunkten der ersten Bilderzeugungseinheit (101) und der zweiten Bilderzeugungseinheit (102) zur ersten Bilderzeugungseinheit (101) und zur zweiten Bilderzeugungseinheit (102) und Ausgeben von Übertragungszeitpunktsteuersignalen zum Steuern von Übertragungszeitpunkten eines ersten Signals und eines zweiten Signals, die von der ersten Bilderzeugungseinheit (101) und der zweiten Bilderzeugungseinheit (102) zur ersten Bilderzeugungseinheit (101) und zur zweiten Bilderzeugungseinheit (102) ausgegeben werden; und
eine Bildverarbeitungseinheit (103) zum Durchführen einer Bildverarbeitung am ersten Signal und am zweiten Signal, die von der ersten Bilderzeugungseinheit (101) und der zweiten Bilderzeugungseinheit (102) ausgegeben werden, **dadurch gekennzeichnet, dass**

die erste Bilderzeugungseinheit (101) mit der Bildverarbeitungseinheit (103) mittels einer ersten Signalleitung (113) direkt verbunden ist; die zweite Bilderzeugungseinheit (102) mit der Bildverarbeitungseinheit (103) mittels einer zweiten Signalleitung (114) direkt verbunden ist; wobei

die Übertragungspfade der ersten Signalleitung (113) und der zweiten Signalleitung (114) eine Pseudodipolantenne bilden; und die Bildsteuereinheit (100) einen Zeitpunkt des Ausgebens des ersten Signals von der ersten Bilderzeugungseinheit (101) zur Bildverarbeitungseinheit (103) mittels der ersten Signalleitung (113) von einem Zeitpunkt des Ausgebens des zweiten Signals von der zweiten Bilderzeugungseinheit (102) zur Bildverarbeitungseinheit (103) mittels der zweiten Signalleitung (114) um eine vorgegebene Zeit Td auf der Grundlage der Übertragungszeitpunktsteuersignale zeitlich versetzt, wobei die vorgegebene Zeit Td die Beziehung

$$|Td| < T$$

erfüllt, wobei T ein Signalwellenformarbeitszyklus des ersten und des zweiten Signals ist.

2. An einem Fahrzeug montierte Kameraeinrichtung nach Anspruch 1, wobei
die Signale, die von der ersten Bilderzeugungseinheit (101) und der zweiten Bilderzeugungseinheit (102) ausgegeben werden, Taktsignale, Bilddatensignale und/oder Bildsynchronisationssignale sind.

3. An einem Fahrzeug montierte Kameraeinrichtung nach Anspruch 1, wobei die erste Bilderzeugungseinheit (101) und die zweite Bilderzeugungseinheit (102) Bilder pro Rahmen gleichzeitig aufnehmen.

4. An einem Fahrzeug montierte Kameraeinrichtung nach Anspruch 1, die Folgendes umfasst:

eine erste Steuerleitung (111) zum Übertragen des Bilderzeugungszeitsignals zwischen der ersten Bilderzeugungseinheit (101) und der Bildsteuereinheit (100) und eine zweite Steuerleitung (112) zum Übertragen des Bilderzeugungszeitsignals zwischen der zweiten Bilderzeugungseinheit (102) und der Bildsteuereinheit (100).

5. An einem Fahrzeug montierte Kameraeinrichtung nach Anspruch 1, die Folgendes umfasst:

eine erste Übertragungszeitpunktsteuersignalleitung (115) zum Übertragen des Übertragungszeitpunktsteuersignals zwischen der ersten Bilderzeugungseinheit (101) und der Bildsteuereinheit (100) und eine zweite Übertragungszeitpunktsteuersignalleitung (116) zum Übertragen des Übertragungszeitpunktsteuersignals zwischen der zweiten Bilderzeugungseinheit (102) und der Bildsteuereinheit (100).

6. An einem Fahrzeug montierte Kameraeinrichtung nach Anspruch 1, wobei
die Bildverarbeitungseinheit (103) Disparitätsinformationen auf der Grundlage der Bilddatensignale, die durch die erste Bilderzeugungseinheit (101) und die zweite Bilderzeugungseinheit (102) aufgenommen wurden, berechnet.

7. An einem Fahrzeug montierte Kameraeinrichtung nach Anspruch 1, die Folgendes umfasst: eine Erkennungseinheit (104) zum Durchführen einer Erkennungsverarbeitung auf der Grundlage der Bilder, die der Bildverarbeitung in der Bildverarbeitungseinheit (103) unterworfen wurden.

8. An einem Fahrzeug montierte Kameraeinrichtung nach Anspruch 7, die Folgendes umfasst: eine Fahrzeugsteuereinheit (105) zum Berechnen und Ausgeben eines Fahrzeugsteuersignals zum Steuern des Fahrzeugs auf der Grundlage eines Erkennungsergebnisses, das der Erkennungsverarbeitung in der Erkennungseinheit (104) unterworfen wurde.

9. An einem Fahrzeug montierte Kameraeinrichtung nach einem der Ansprüche 1 bis 8, wobei die Phasen der ersten Signalleitung (113) und der zweiten Signalleitung (114) um die vorgegebene Zeitvorgabe Td = 180 Grad versetzt sind.

**Revendications**

1. Dispositif de caméra monté sur un véhicule, comprenant :

une première unité d'imagerie (101) pour prendre une image et délivrer un signal de données d'image ; une seconde unité d'imagerie (102) pour prendre une image et délivrer un signal de données d'image ; une unité de commande d'image (100) pour délivrer des signaux de synchronisation d'imagerie servant à commander des synchronisations d'imagerie de la première unité d'imagerie (101) et de la seconde unité d'imagerie (102) à la première unité d'imagerie (101) et à la seconde unité d'imagerie (102), et délivrer des signaux de commande de synchronisation de transmission pour commander des synchronisations de transmission d'un premier signal et d'un second signal délivrés par la première unité d'imagerie (101) et la seconde unité d'imagerie (102) à la première unité d'imagerie (101) et la seconde unité d'imagerie (102) ; et

une unité de traitement d'image (103) pour effectuer un traitement d'image sur le premier signal et le second signal délivrés par la première unité d'imagerie (101) et la seconde unité d'imagerie (102),

**caractérisé en ce que**

la première unité d'imagerie (101) est directement connectée à l'unité de traitement d'image (103) par une première ligne de signal (113) ;

la seconde unité d'imagerie (102) est directement connectée à l'unité de traitement d'image (103) par une seconde ligne de signal (114) ;

les trajets de transmission de la première ligne de signal (113) et la seconde ligne de signal (114) forment une pseudo-antenne dipolaire ; et

l'unité de commande d'image (100) décale temporellement une synchronisation de délivrance du premier signal de la première unité d'imagerie (101) à l'unité de traitement d'image (103) par la première ligne de signal (113) par rapport à une synchronisation de délivrance du second signal de la seconde unité d'imagerie (102) à l'unité de traitement d'image (103) par la seconde ligne de signal (114) d'un temps prédéterminé Td sur la base des signaux de commande de synchronisation de transmission, le temps prédéterminé Td satisfaisant la relation

$$\left| Td \right| < T$$

dans laquelle T est un cycle de forme d'onde de signal du premier et du second signal.

2. Dispositif de caméra monté sur un véhicule selon la revendication 1, dans lequel

les signaux délivrés par la première unité d'imagerie (101) et la seconde unité d'imagerie (102) sont au moins des signaux d'horloge, des signaux de données d'image ou des signaux de synchronisation d'image.

3. Dispositif de caméra monté sur un véhicule selon la revendication 1, dans lequel

la première unité d'imagerie (101) et la seconde unité d'imagerie (102) prennent des images par trame en même temps.

4. Dispositif de caméra monté sur un véhicule selon la revendication 1, comprenant :

une première ligne de commande (111) pour transmettre le signal de synchronisation d'imagerie entre la première unité d'imagerie (101) et l'unité de commande d'image (100) ; et

une seconde ligne de commande (112) pour transmettre le signal de synchronisation d'imagerie entre la seconde unité d'imagerie (102) et l'unité de commande d'image (100).

5. Dispositif de caméra monté sur un véhicule selon la revendication 1, comprenant :

une première ligne de signal de commande de synchronisation de transmission (115) pour transmettre le signal de commande de synchronisation de transmission entre la première unité d'imagerie (101) et l'unité de commande d'image (100) ; et

une seconde ligne de signal de commande de synchronisation de transmission (116) pour transmettre le signal de commande de synchronisation de transmission entre la seconde unité d'imagerie (102) et l'unité de commande d'image (100).

6. Dispositif de caméra monté sur un véhicule selon la revendication 1, dans lequel

l'unité de traitement d'image (103) calcule des informations de disparité sur la base des signaux de données d'image pris par la première unité d'imagerie (101) et la seconde unité d'imagerie (102).

7. Dispositif de caméra monté sur un véhicule selon la revendication 1, comprenant :

une unité de reconnaissance (104) pour effectuer un traitement de reconnaissance sur la base des images soumises au traitement d'image dans l'unité de traitement d'image (103).

8. Dispositif de caméra monté sur un véhicule selon la revendication 7, comprenant :

une unité de commande de véhicule (105) pour calculer et délivrer un signal de commande de véhicule pour commander le véhicule sur la base d'un résultat de reconnaissance soumis au traitement de reconnaissance dans l'unité de reconnaissance (104).

9. Dispositif de caméra monté sur un véhicule selon l'une quelconque des revendications 1 à 8, dans lequel

les phases de la première ligne de signal (113) et de la seconde ligne de signal (114) sont décalées d'une synchronisation prédéterminée Td = 180°.

## *FIG. 1*

## *FIG. 2*

## FIG. 3

SIGNAL FROM FIRST
IMAGING UNIT

Td

SIGNAL FROM SECOND
IMAGING UNIT

T

## FIG. 4

SIGNAL FROM FIRST
IMAGING UNIT

Td

SIGNAL FROM SECOND
IMAGING UNIT

T

# FIG. 5

*FIG. 6*

# FIG. 7

# FIG. 8

SIGNAL FROM FIRST
IMAGING UNIT

Td1

SIGNAL PASSING
THROUGH CIRCUIT
DEVICE 201

Td3

SIGNAL FROM
SECOND IMAGING
UNIT

Td2

SIGNAL PASSING
THROUGH CIRCUIT
DEVICE 202

## FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070076112 A1
- US 20100328427 A1
- JP 2001345790 A
- US 2007076112 A1
- US 2010328427 A1